# EUROPÄISCHE PATENTANMELDUNG

(11) **EP 0 908 422 A1**
(43) Veröffentlichungstag der Anmeldung: **14.04.1999**
(21) Anmeldenummer: 98118652.1
(22) Anmeldetag: 02.10.1998
(51) Int. Cl.: C04B 2/10

(54) **Verfahren zum Herstellen von Branntkalk**

(30) Priorität: 02.10.1997 DE 19743742
(71) Anmelder: SICOWA Verfahrenstechnik für Baustoffe GmbH & Co. KG, 52072 Aachen (DE); PFEIFER & LANGEN, 50933 Köln (DE)
(72) Erfinder: Morgenroth, Henning, Dr.-Ing., 52152 Simmerath (DE); Koslowski, Thomas, Dr.-Ing., 52072 Aachen (DE)

(57) **Zusammenfassung**

Die Erfindung betrifft ein Verfahren zum Herstellen von Branntkalk aus einer feinstteiligen, feuchten Kalkmasse, wie sie bei der Zuckergewinnung anfällt, wobei die Calciumcarbonat, Phosphate, Silikate sowie organische Bestandteile enthaltende Kalkmasse zunächst pelletiert wird und einem Drehrohrofen eingebracht wird, wobei im Drehrohrofen durch Zufuhr von Wärmeenergie
a) zunächst die Feuchtigkeit ausgetrieben wird,
b) unter Zufuhr von Sauerstoff und/oder einem sauerstoffhaltigen Gasgemisch die organischen Bestandteile unter Gasbildung zersetzt werden, wobei das Gas durch die Poren zur Oberfläche und in die Ofenatmosphäre gelangt und dort verbrannt wird,
c) und unter weiterer Zugabe von Sauerstoff und Energie der in den Pellets verbleibende Restkohlenstoff verbrannt wird,
d) das Calciumcarbonat durch weitere Wärmezugabe entsäuert wird,
e) anschließend in einem Kühler abgekühlt wird und
f) anschließend fein aufgemahlen wird.

## Beschreibung

Die Erfindung betrifft ein Verfahren zum Herstellen von Branntkalk aus Carbo-Kalk.

Carbo-Kalk ist ein Rückstandsprodukt aus der Zuckerindustrie, welches saisonal vom Herbst bis zum Frühjahr hin anfällt.

Dieser Carbo-Kalk stammt aus der Zuckerindustrie. In der Zuckerindustrie wird der aus Zuckerrüben extrahierte Zuckerrohsaft einer Saftreinigung unterzogen, bei der die im Rohsaft enthaltenen Nichtzuckerstoffe weitgehend entfernt werden sollen. Die molekular- oder colloiddispers gelösten Nichtzuckerstoffe lassen sich aus diesem Rohsaft durch die Zugabe von Branntkalk ausfällen. Gefällt werden Anionen, wie Phosphat, Sulfat, Citrat, Malat, Oxalat, die mit den Calciumionen schwerlösliche Calciumverbindungen eingehen, darüber hinaus werden die Magnesiumionen als Magnesiumhydroxid gefällt. Das im Rohzuckersaft noch vorhandene Calciumhydroxid wird mit zugesetztem Kohlendioxid zu Calciumcarbonat gefällt. Infolge dessen besteht der Carbo-Kalk im wesentlichen aus Calciumcarbonat und Verunreinigungen. Die Verunreinigungen bestehen insbesondere aus Calciumphosphaten, -sulfaten, - -citraten, -malaten, -oxalaten sowie organischen Substanzen.

Darüberhinaus weist das angefallene Produkt eine sehr hohe Feinheit und gleichzeitig eine sehr hohe Feuchtigkeit auf, was eine Weiterverarbeitung bislang verhindert hat. Dieser Carbo-Kalk wurde aufgrund seiner Verunreinigung sowie der hohen Feinheit und der hohen Feuchtigkeit bislang lediglich als Düngekalk in der Landwirtschaft eingesetzt.

Im Anlieferungszustand hat der Carbo-Kalk in etwa eine Feuchtigkeit von 30 bis 40 M-% und eine Feinheit von 77 % < 32µm. Der Carbo-Kalk ist erdfeucht, knetbar und von bräunlicher Farbe.

Insbesondere die hohe Feinheit sowie die Verunreinigungen haben es bisher nicht möglich gemacht, den Carbo-Kalk einer anderweitigen Nutzung, insbesondere einer Nutzung als Recycling Baustoff zuzuführen, da bei jeder Weiterverarbeitung eine erhebliche Staubbelastung auftritt und Kalke mit derart hohen Kohlenstoffgehalten als Baukalke nicht verwendbar sind.

Aufgabe der Erfindung ist es, ein Verfahren zu schaffen, mit welchem es ermöglicht wird, aus Carbo-Kalk einen Branntkalk herzustellen, welcher im wesentlichen gleiche Eigenschaften aufweist, wie üblicherweise hergestellter Branntkalk.

Diese Aufgabe wird mit einem Verfahren gemäß des Anspruchs 1 gelöst. Vorteilhafte Aus- und Weiterbildungen sind in Unteransprüchen gekennzeichnet.

Erfindungsgemäß wird der Carbo-Kalk nach der Anlieferung pellitiert oder preßagglomeriert und anschließend in einem Drehrohrofen gebrannt, wobei die organischen Bestandteile ausgebrannt werden. Dabei wird zweckmäßigerweise die Feuchtigkeit der Pellets so auf die organischen Bestandteile eingestellt, daß die verbrennenden organischen Bestandteile die Energie für die Verdampfungsenthalpie der enthaltenen Feuchtigkeit liefern.

Die Brenntemperatur wird dabei so gewählt, daß es zu einer Entsäuerung des Kalkes kommt. Das ofenfallende Produkt wird anschließend vermahlen, wodurch je nach Brennführung Hart- oder Weichbranntkalke erzielt werden, welche im wesentlichen die gleichen Eigenschaften aufweisen, wie handelsübliche Primärbrandkalke, auch bezüglich der Farbe.

Im folgenden wird das erfindungsgemäße Verfahren beispielhaft erläutert.

Carbo-Kalk ist im Anlieferungszustand eine feuchte, teilweise verklumpte Masse von bräunlicher Farbe. Die Schüttdichte dieses Carbo-Kalks beträgt ungetrocknet in etwa 625 bis 675 Gramm pro Liter, wobei die Reindichte 2,2 bis 2,3 g/cm³ beträgt. Die Feuchtigkeit des Carbo-Kalks beträgt zwischen 25 und 35 M.-% bzw. zwischen 35 und 45 M.-% gerechnet auf die Trockenmasse (atro). Die Feinheit des getrockneten Ausgangsmaterials beträgt zwischen 74 und 80 M.-% < 32µm.

Das Rohmaterial enthält als Hauptbestandteil Calciumcarbonat (CaCO₃) sowie Calciumoxalate, MgO, SiO₂ sowie weitere organische Verunreinigungen und Phosphate.

In überraschender Weise entstehen durch das beschriebene Verfahren Pellets mit einer sehr festen Oberflächenhülle in einem relativ engen Kornband. Das erdfeuchte und knetbare Ausgangsmaterial wird zunächst in einen Intensivmischer eingebracht. Ein geeignetes Mischaggregat ist beispielsweise ein Intensivmischer mit drehendem Mischgutbehälter, der das Mischgut in den Bereich eines exentrisch angeordneten, schnell rotierenden Mischwerkzeuges fördert. Hierbei entstehen gegenläufige Mischgutströme mit hoher Geschwindigkeitsdifferenz. Derartige Mischer können nach dem Gegenstrom- oder Querstromprinzip ausgelegt sein, wobei sie sowohl für den Chargenbetrieb als für den kontinuierlichen Betrieb ausgelegt sein können.

Der Mischer wird angefahren und derart betrieben, daß aus dem ursprünglich knetbaren Material ein lockeres, flockiges, gut mischbares Material entsteht. Bei weiterer Behandlung erfolgt eine Verdichtung des Materials, wodurch kleine Klümpchen, bzw. Agglomerate in Form von Primärpellets entstehen. Diese Primärpelletbildung wird vorzugsweise durch z.B. eingesprühte Wasserzugabe, beispielsweise in Mengen von 1 bis 2 M-% Wasser reguliert. Nach Formung dieser Primärpellets wird anschließend getrockneter, feinteiliger Trockenstoff aufgepudert. Hierdurch wird ein Individualisieren der Klümpchen bewirkt. Als Trockenstoff für das Bepudern sind insbesondere Kalkmehl, getrockneter Carbo-Kalk, Carbo-Kalk aus der Trockner-, Ofen- und Mühlen-Entstaubung sowie sonst aus dem Ofen oder Trockner ausgetragene Feinstanteile geeignet.

Je nach Ausgangsfeuchte des Ausgangsmaterials kann zur Unterstützung der Primärpelletbildung auch ohne Wasserzugabe feiner trockener Kalk oder getrockneter Carbo-Kalk zugepudert werden. Gegebenenfalls ist es aber auch möglich, lediglich durch Wasserzugabe die Primärpelletbildung zu erreichen. Die Primärpellets werden als Keimlinge für die Ausbildung größerer Pellets verwendet, indem die Keimlinge ggf. mit Wasser kontaktiert und/oder mit Trockenstoff (Kalk, Carbo-Kalk, Entstaubungs-Carbo-Kalk) bepudert werden. Die Pelletgröße und Pelletdichte können zudem über die Pelletierzeit sowie die Drehzahl des Mischers gesteuert werden. In überraschender Weise entstehen durch das beschriebene Verfahren Pellets mit einer sehr festen Oberflächenhülle in einem relativ engen Kornband.

Die derart erzeugten Carbo-Kalk-Pellets werden vorzugsweise anschließend noch einem Pelletierteller zugeführt und auf dem Pelletierteller nachgerollt. Hierdurch ergibt sich eine weitgehende Oberflächenkonditionierung bzw. Oberflächenschichtverdichtung und Abrundung der Pellets. Hierfür können die Pellets gegebenenfalls weiter mit trockenem Kalk oder trockenem Carbo-Kalk bepudert und/oder mit weiterem Wasser besprüht werden.

Durch das Nachpelletieren auf einem Pelletierteller wird eine erhöhte Abriebfestigkeit erzielt. Diese Abriebfestigkeit ist beim Brennen in einem Drehrohrofen erforderlich, damit hohe Abstaubungsverluste und Abriebverluste vermieden werden. Die erfindungsgemäßen Pellets weisen eine von innen nach außen abnehmende Porosität auf, die die vollständige Entwässerung, das vollständige Ausbrennen der organischen Bestandteile sowie das Entsäuern begünstigt.

Die Grünpellets weisen eine Feuchtigkeit von 30 bis 40 M-% auf. Die Zeitdauer für die Herstellung im Pelletiermischer beträgt beispielsweise 10 bis 15 Minuten, die Zeit für das Nachrollen auf einem Pelletierteller beispielsweise 2 bis 5 Minuten.

Während des Pelletierens wird eine Trockenstoff-Zusatzmenge von z.B. 10 bis 20 M-% zugegeben, wobei diese Zugabe kontinuierlich oder diskontinuierlich erfolgen kann. In der Regel wird, abgestimmt auf das Verhalten der Rohmasse, diskontinuierlich Trokenstoff zugegeben.

Durch das Nachrollen auf dem Pelletierteller werden darüber hinaus auch die Korndurchmesser vergleichmäßigt.

Die Schüttdichte der fertig erstellten Pellets beträgt zwischen 800 und 850 g/l wobei die Korngrößenverteilung zwischen 90 und 95 % > 1 mm beträgt.

Eine weitere Möglichkeit, das feine, feuchte Ausgangsmaterial in größere, in einem Drehrohrofen behandelbare Granulate bzw. Pellets zu überführen, ist die sogenannte Preßagglomeration. Bei diesem Verfahren wird die Rohmasse mit z.B. einer an sich bekannten Brikettier- oder Walzenpresse zu Grünpresslingen verarbeitet. Bei der Preßagglomeration wird eine Konditionierung mittels Bepudern oder Besprühen mit Wasser während der Agglomeration nicht durchgeführt. Der Ausgangsstoff wird direkt mit der Walzenpresse verarbeitet, insbesondere wird der Ausgangsstoff vor der Verpressung in einem Mischer homogenisiert und die Beschaffenheit, insbesondere die Feuchtigkeit durch das Aufsprühen von Wasser und/oder das Bepudern mit Kalkmehl oder getrocknetem Carbo-Kalk bzw. Carbo-Kalk aus der Entstaubung reguliert.

Die durch die Preßagglomeration gewonnenen Presslinge weisen herstellungsbeeinflußt einen vorbestimmten Verdichtungsgrad auf. Sie können zudem auf einem Pelletierteller nachgerollt werden. Auch hierbei ist es möglich, durch Bepudern und/oder Besprühen mit Wasser die Oberfläche weiter zu konditionieren.

Die derart durch Pelletierung im Mischer oder durch Preßagglomeration gewonnenen Grünpellets bzw. Grünpresslinge werden anschließend einem Brand in einem Drehrohrofen zugeführt. Vor dem Brennen kann eine Trocknung z.B. mittels Abluft vorgesehen werden, wobei die heißen Ofenabgase insbesondere im Gegenstrom mit den Pellets kontaktiert werden oder nach an sich bekannter Weise durch ein Pelletgutbett beispielsweise durch einen an sich bekannten Rostvorwärmer geführt werden. Darüberhinaus können die Pellets auch in anderen herkömmlichen Trocknungsaggregaten, beispielsweise Trommeltrocknern, getrocknet werden. Im letzteren Fall werden die Grünpellets bzw. Grünpresslinge anschließend dem Drehrohrofen zugeführt, wobei sie zuvor in einem Puffersilo zwischengelagert werden können.

Im Einlaufbereich des Drehrohrofens wird zunächst die in den Pellets vorhandene Feuchtigkeit durch das Vorbeistreichen der heißen Ofenabgase ausgetrieben. In einem heißeren Übergangsbereich des Drehrohrofens werden bei Gutteperaturen um 400°C insbesondere bei 300°C bis 500°C die im Carbo-Kalk enthaltenen organischen Bestandteile zersetzt und ausgegast. Die ausgasenden bzw. sich zersetzenden organischen Bestandteile werden erfindungsgemäß quantitativ verbrannt, indem während des Brennprozesses Sauerstoff oder Luft oder ein Sauerstoff-Luft-Gemisch durch den Ofen geleitet wird.

Vorzugsweise wird die Ofenatmosphäre derart eingestellt, daß durch den zugeführten Sauerstoff sowohl der in den Ofen eingeführte Brennstoff als auch die im Carbo-Kalk enthaltenen organischen Bestandteile verbrennen.

Nach dieser ersten Zersetzungsstufe verbleibt in den Pellets noch unverbrannter, koksartiger Kohlenstoff. Die Pellets gelangen dann in den heißeren Bereich des Ofens, indem sie Temperaturen zwischen 950 bis 1150° ausgesetzt werden. Nachdem das Gut eine Temperatur über 800° erreicht hat, brennt auch der koksartige Kohlenstoff aus. Auch für diesen zweiten Ausbrennschritt wird die Ofenatmosphäre derart gewählt, daß eine quantitative Aufoxidierung des Kohlenstoffs erfolgt.

Die Feuchtigkeit der Grünpellets wird derart eingestellt, daß die verbrennenden organischen Bestandteile die Energie liefern, die zum Austreiben dieser Feuchte notwendig ist. Die Feuchte der Pellets kann unter anderem durch das Trocknen derart eingestellt werden, daß die Pellets im Ofen eine Feuchtigkeit aufweisen, welche energetisch gesehen alleine durch das Verbrennen der organischen Bestandteile im Carbo-Kalk ausgetrieben werden kann. Eine zu weitgehende Trocknung, also ein niedriger Feuchtegehalt, würde die organischen Bestandteile im Carbo-Kalk teilweise ungenutzt verbrennen lassen, während zu feuchte Pellets oder Presslinge einen erhöhten Brennstoffeinsatz verursachen würden.

Das ofenfallende Gut wird z.B. anschließend in einem Trommel- oder Rostkühler abgekühlt werden, wobei die Kühlluft in an sich bekannter Weise dem Drehrohrofen als Brennluft zur Verfügung gestellt werden kann.

Das gebrannte und abgekühlte Gut wird anschließend vermahlen, wobei ein Weißfeinkalk entsteht, der der DIN 1060-1 für Baukalk entspricht.

Während des Brandes werden die phosphatischen und silikatischen Verunreinigungen chemisch umgewandelt. Aus den Phosphaten entstehen Calcium-Silikat-Phosphate und Calcium-Phosphate. Aus den Silikaten wird teilweise Quarz und teilweise Dicalciumsilikat (C₂S) gebildet. Diese Inhaltsstoffe beeinträchtigen jedoch das gebrannte Endprodukt nicht, da sie lediglich in geringen Mengen enthalten sind.

Bei dem erfindungsgemäßen Verfahren ist von Vorteil, daß aus einem industriellen Reststoff ein hochwertiger Grundstoff für die Baustoffindustrie, beispielsweise die Kalk-Sandstein-Industrie und die Porenbetonindustrie geschaffen wird.

Durch die Auswahl eines speziellen Pelletierprozesses, bei dem aus dem ursprünglich knetbaren Material ein lockeres, flockiges Material entsteht, aus welchem anschließend kleine Agglomerate gebildet werden, welche durch das Besprühen mit Wasser und/oder das Bepudern mit Feinsttrockenstoffen individualisiert und vergrößert werden, wird ein Pellet erreicht, das eine derartige Porosität besitzt, daß die Feuchtigkeit sowie die Gase beim Zersetzen der organischen Bestandteile und dem Entsäuern des Kalks aus dem Inneren des Pellets an die Oberfläche gelangen können ohne die Pelletstruktur zu zerstören, wobei synergistisch dazu die Pellets eine derartige Festigkeit und insbesondere Oberflächenfestigkeit aufweisen, daß sie für den Trocknungs- und Brennprozeß ausreichend abriebfest und stabil sind.

Darüberhinaus ermöglicht das erfindungsgemäße Verfahren diesen Sekundärrohstoff auf besonders wirtschaftliche Art und Weise herzustellen, indem die organischen Inhaltsstoffe des Carbo-Kalks gezielt während des Brandes erfindungsgemäß aktiv genutzt, inbesondere die gezielte Zugabe von zusätzlichem Sauerstoff und/oder Luft quantitativ verbrannt werden. Dieser erfindungsgemäß energieoptimierte Brennprozeß ermöglicht eine besonders kostensparende und wirtschaftliche Herstellung.

## Patentansprüche

1. Verfahren zum Herstellen von Branntkalk aus einer feinstteiligen, feuchten Kalkmasse, wie sie bei der Zuckergewinnung anfällt, wobei die Calciumcarbonat, Phosphate, Silikate sowie organische Bestandteile enthaltende Kalkmasse zunächst pelletiert wird und einem Drehrohrofen eingebracht wird, wobei im Drehrohrofen durch Zufuhr von Wärmeenergie
a) zunächst die Feuchtigkeit ausgetrieben wird,
b) unter Zufuhr von Sauerstoff und/oder einem sauerstoffhaltigen Gasgemisch die organischen Bestandteile unter Gasbildung zersetzt werden, wobei das Gas durch die Poren zur Oberfläche und in die Ofenatmosphäre gelangt und dort verbrannt wird,
c) und unter weiterer Zugabe von Sauerstoff und Energie der in den Pellets verbleibende Restkohlenstoff verbrannt wird,
d) das Calciumcarbonat durch weitere Wärmezugabe entsäuert wird,
e) anschließend in einem Kühler abgekühlt wird und
f) anschließend fein aufgemahlen wird.

2. Verfahren nach Anspruch 1, **dadurch gekennzeichnet**, daß abgestimmt auf die organischen Bestandteile während des Brennens so viel zusätzlicher Sauerstoff und/oder Luft zugegeben werden, daß die organischen Bestandteile quantitativ verbrannt werden.

3. Verfahren nach Anspruch 1 und/oder 2, **dadurch gekennzeichnet**, daß die Feuchtigkeit der Pellets derart eingestellt wird, daß die Verbrennungsenthalpie der organischen Bestandteile ausreicht, um die Verdampfungsenthalpie für die in den Pellets vorhandene Feuchtigkeit aufzubringen.

4. Verfahren nach einem oder mehreren der Ansprüche 1 bis 3, **dadurch gekennzeichnet**, daß die knetbare und erdfeuchte Carbo-Kalkrohmasse in einem Intensivmischer derart gemischt wird, daß ein lockeres, flockiges Material entsteht, wobei das Material durch die weitere Behandlung im Mischer derart verdichtet wird, daß sich Klümpchen bzw. Agglomerate bilden.

5. Verfahren nach Ansprcuh 4, **dadurch gekennzeichnet**, daß die Bildung der Klümpchen bzw. Agglomerate in Form von Primärpellets durch Wassereinsprühung reguliert wird.

6. Verfahren nach Anspruch 4 und/oder 5, **dadurch gekennzeichnet**, daß die Primärpelletbildung durch Aufpudern von getrocknetem feinstteiligen Calciumcarbonat oder getrocknetem Carbokalk reguliert wird, so daß eine Individualisierung der Klümpchen oder Agglomerate erfolgt.

7. Verfahren nach einem oder mehreren der Ansprüche 1 bis 6, **dadurch gekennzeichnet**, daß die Primärpellets als Keimlinge für Ausbildung größerer Pellets verwendet werden, in dem die Keimlinge gegebenenfalls mit Wasser kontaktiert und/oder mit Trockenstoff (Kalk, Carbo-Kalk) bepudert werden.

8. Verfahren nach einem oder mehreren der Ansprüche 1 bis 7, **dadurch gekennzeichnet**, daß die Pelletgröße und die Pelletdichte über die Pelletierzeit und/oder die Drehzahl des Mischers eingestellt werden.

9. Verfahren nach einem oder mehreren der Ansprüche 1 bis 8, **dadurch gekennzeichnet**, daß die im Mischer erzeugten Pellets auf einem Pelletierteller nachpelletiert werden, um eine Oberflächenkonditionierung und/oder Oberflächenschichtverdichtung und/oder eine Abrundung der Pellets durchzuführen.

10. Verfahren nach Anspruch 9, **dadurch gekennzeichnet**, daß die Pellets gegebenenfalls mit trockenem Kalk und/oder trockenem Carbo-Kalk bepudert und/oder mit weiterem Wasser besprüht werden.

11. Verfahren nach einem oder mehreren der Ansprüche 4 bis 10, **dadurch gekennzeichnet**, daß 0,5 bis 4 M-% Wasser insbesondere 1 bis 2 M-% Wasser zugedüst werden.

12. Verfahren nach einem oder mehreren der Ansprüche 4 bis 11, **dadurch gekennzeichnet**, daß Trockenstoff in einer Menge von 10 bis 25 M-%, insbesondere 15 bis 20 M-% zugegeben wird.

13. Verfahren nach einem oder mehreren der Ansprüche 4 bis 12, **dadurch gekennzeichnet**, daß die Masse 5 bis 20 Minuten, insbesondere 10 bis 15 Minuten im Mischer bearbeitet wird.

14. Verfahren nach einem oder mehreren der Ansprüche 4 bis 13, **dadurch gekennzeichnet**, daß die Pellets 1 bis 8 Minuten, insbesondere 2 bis 5 Minuten auf dem Pelletierteller nachgerollt werden.

15. Verfahren nach einem oder mehreren der Ansprüche 1 bis 14, **dadurch gekennzeichnet**, daß die Pellets derart hergestellt werden, daß sie eine Schüttdichte zwischen 800 und 850 g/l aufweisen.

16. Verfahren nach einem oder mehreren der Ansprüche 1 bis 15, **dadurch gekennzeichnet**, daß die Masse derart pelletiert wird, daß 90 bis 95 % der Pellets > 1 mm sind.

17. Verfahren nach einem oder mehreren der Ansprüche 1 bis 3, **dadurch gekennzeichnet**, daß die Carbo-Kalk-Rohmasse mit einer Walzenpresse pelletiert wird.

18. Verfahren nach Anspruch 17, **dadurch gekennzeichnet**, daß die Ausgangsmasse vor der Verpressung in einem Mischer homogenisiert und die Beschaffenheit, insbesondere die Feuchtigkeit durch das Aufsprühen von Wasser und/oder das Bepudern mit Kalkmehl oder getrocknetem Carbo-Kalk oder Carbo-Kalk aus der Trockner-, Ofen- oder Mühlenentstaubung reguliert wird.

19. Verfahren nach einem oder mehreren der Ansprüche 17 und/oder 18, **dadurch gekennzeichnet**, daß die Presslinge auf einem Pelletierteller nachgerollt werden.

20. Verfahren nach einem oder mehreren der vorhergehenden Ansprüche, **dadurch gekennzeichnet**, daß die Grünpellets bzw. Grünpresslinge vor dem Brennen getrocknet werden.

21. Verfahren nach einem oder mehreren der vorhergehenden Ansprüche**, dadurch gekennzeichnet**, daß die Pellets mit Ofenabluft bzw. Ofenabgasen im Gleich- oder Gegenstrom getrocknet werden.

22. Verfahren nach einem oder mehreren der vorhergehenden Ansprüche, **dadurch gekennzeichnet**, daß die Pellets in einem Trommeltrockner getrocknet werden.

23. Verfahren nach einem oder mehreren der Ansprüche 1 bis 21, **dadurch gekennzeichnet**, daß die Pellets vor dem Brennen mit einem Rostvorwärmer getrocknet werden.

24. Verfahren nach einem oder mehreren der vorhergehenden Ansprüche, **dadurch gekennzeichnet**, daß die vorbestimmte Restfeuchte der Pellets im Einlaufbereich des Drehrohrofens ausgetrieben wird.

25. Verfahren nach einem oder mehreren der vorhergehenden Ansprüche, **dadurch gekennzeichnet**, daß im heißeren Übergangsbereich des Drehrohrofens die im Carbo-Kalk enthaltenen organischen Bestandteile zersetzt und ausgetrieben werden.

26. Verfahren nach einem oder mehreren der vorhergehenden Ansprüche, **dadurch gekennzeichnet**, daß während des Zersetzens und Ausgasens so viel Sauerstoff oder Luft oder Sauerstoff-Luftgemisch durch den Ofen geleitet wird, daß die sich zersetzenden und ausgasenden organischen Bestandteile verbrannt werden.

27. Verfahren nach einem oder mehreren der vorhergehenden Ansprüche, **dadurch gekennzeichnet**, daß die Pellets nach dem Übergangsbereich in einen Calcinierbereich des Drehrohrofens geführt werden, indem sie Temperaturen zwischen 950 bis 1150 °C ausgesetzt werden, wobei nachdem das Gut eine Temperatur über 800 °C erreicht hat, koksartiger Restkohlenstoff aus den Pellets ausgebrannt wird, wobei während dieses Ausbrennprozesses Sauerstoff oder Luft oder ein Sauerstoff-Luftgemisch in den Ofen eingeleitet wird, so daß der Restkohlenstoff quantitativ verbrannt wird.

28. Verfahren nach einem oder mehreren der vorhergehenden Ansprüche, **dadurch gekennzeichnet**, daß die Pellets so lange im Calcinierbereich gebrannt werden, bis der Kalk entsäuert ist.

29. Verfahren nach einem oder mehreren der vorhergehenden Ansprüche, **dadurch gekennzeichnet**, daß ofenfallende Gut in Rostkühlern oder Trommelkühlern abgekühlt und anschließend gemahlen wird.
